# FASCICULE DE BREVET EUROPEEN

(11) **EP 0 551 220 B1**
(45) Date de publication et mention de la délivrance du brevet: **11.09.1996**
(21) Numéro de dépôt: 93400005.0
(22) Date de dépôt: 05.01.1993
(51) Int. Cl.: F16H 61/14

(54) **Procédé et dispositif de commande de la pression d'alimentation d'un récepteur hydraulique et d'un embrayage de pontage de convertisseur de couple**
Verfahren und Einrichtung zur Steuerung der Druckmittelversorgung eines hydraulischen Verbrauchers und einer Überbrückungskupplung eines Drehmomentwandlers
Method and device for the control of the pressure supply for a hydraulic actuator and a lock-up clutch of a torque converter

(30) Priorité: 07.01.1992 FR 9200055
(43) Date de publication de la demande: 14.07.1993
(73) Titulaire: REGIE NATIONALE DES USINES RENAULT S.A., F-92109 Boulogne Billancourt (FR)
(72) Inventeur: Pescarou, Philippe, W-75015 Paris (FR)

(56) Documents cités:
- DE-A- 3 627 611
- FR-A- 2 543 242
- US-A- 4 572 338
- US-A- 4 998 604
- PATENT ABSTRACTS OF JAPAN vol. 016, no. 426 (M-1306)8 Septembre 1992 & JP-A-41 45 262 (TOYOTA)

## Description

La présente invention se rapporte à la commande hydraulique des transmissions automatiques à rapports étagés, notamment pour véhicules automobiles, comportant un train épicycloïdal qui reçoit le couple moteur par l'intermédiaire d'un convertisseur de couple, sur au moins un rapport de marche avant.

Plus précisément, cette invention concerne un dispositif de changement de vitesses automatique, dont le convertisseur de couple est ponté sur les rapports supérieurs, conformément à une disposition connue. Le pontage, ou mise hors service temporaire du convertisseur, qui se traduit par une transmission directe du couple entre le moteur et le train épicycloïdal sur les rapports correspondants, est de façon classique, assuré par un embrayage de pontage, commandé à partir du bloc hydraulique principal de la transmission.

Le circuit hydraulique de commande de pontage comprend le plus souvent un distributeur hydraulique à deux positions imposant à l'embrayage de pontage des consignes d'alimentation responsables du pontage ou du dépontage du convertisseur. La logique séquentielle du bloc hydraulique de la transmission implique dans ce cas le maintien du distributeur dans une première position, sur les rapports ou le pontage du convertisseur est souhaité, et son maintien dans une seconde position, sur les autres rapports.

La publication FR-A-2682445 de la demanderesse décrit, un procédé et un dispositif de commande automatique de la pression d'alimentation d'un récepteur hydraulique, visant à assurer une interruption de la transmission du couple lorsque le véhicule est à l'arrêt, moteur au ralenti, sur le premier rapport de marche avant. Cette fonction, appelée débrayage à l'arrêt, est mise en oeuvre grâce au basculement de plusieurs distributeurs hydrauliques à deux positions, imposant une consigne d'alimentation spécifique à un récepteur associé au premier rapport de marche avant, appelé récepteur d'entrée de la transmission.

Conformément à cette demande de brevet, l'intégration des fonctions de pontage du convertisseur et de débrayage à l'arrêt, dans le bloc hydraulique de la transmission, s'effectue au prix d'une augmentation du nombre total de distributeurs hydrauliques de celle-ci.

Par la publication DE-A-3627611, on connaît un autre système de commande des fonctions de pontage du convertisseur et du débrayage à l'arrêt d'une transmission automatique disposant uniquement de trois rapports de marche avant.

Selon cette publication qui illustre le préambule des revendications 1 et 2, un distributeur hydraulique principal placé sous le contrôle d'une électrovanne par l'intermédiaire d'un tiroir de commande de passage du second rapport de marche avant, pilote simultanément les fonctions de pontage du convertisseur et du débrayage à l'arrêt.

La présente invention vise à élargir l'application de telles dispositions à la plupart des transmissions automatiques.

Elle concerne un procédé de commande de la pression d'alimentation d'un récepteur hydraulique d'entrée, et d'un embrayage de pontage du convertisseur de couple d'une transmission automatique à rapports étagés comportant un train épicycloïdal qui reçoit le couple sur au moins un rapport de marche avant par l'intermédiaire dudit convertisseur, et un circuit hydraulique de commande muni d'un distributeur hydraulique principal basculant entre une première position ou position (0) dans laquelle une pression d'alimentation P3 est orientée de façon à interdire le pontage du convertisseur en autorisant le débrayage à l'arrêt de la transmission, et une seconde position, ou position (1) dans laquelle la même pression d'alimentation P3 est orientée de façon à autoriser le pontage du convertisseur, tandis que la fonction de débrayage à l'arrêt est inopérante, Ce procédé est caractérisé en ce que le distributeur principal est placé sous le contrôle d'une électrovanne centrale de façon à occuper sa première position ou position (0) sur le premier rapport de marche avant, et sa seconde position ou position (1) sur les autres rapports, y compris le rapport de marche arrière.

L'invention concerne également un dispositif de commande de la pression d'alimentation d'un récepteur hydraulique d'entrée et d'un embrayage de pontage du convertisseur de couple d'une transmission automatique à rapports étagés, comportant une pompe hydraulique délivrant par l'intermédiaire d'un régulateur de pression principal une pression de ligne (PL) dirigée en direction d'une vanne de régulation de pression du convertisseur de couple, en direction d'un récepteur hydraulique responsable de l'interruption de la transmission du couple aux roues lorsque les conditions de débrayage à l'arrêt sont satisfaires, et en direction d'un distributeur principal qui reçoit une pression d'alimentation P3 régulée à partir de la pression de ligne (PL) par une seconde vanne de régulation, et oriente ladite pression d'alimentation P3 de façon à interdire le pontage du convertisseur en autorisant le débrayage à l'arrêt, ou inversement. Ce dispositif est caractérisé en ce que distributeur principal occupe une première position ou position (0) sur le premier rapport de marche avant et une seconde position ou position (1) sur les autres rapports, y compris le rapport de marche arrière.

L'invention sera mieux comprise à la lecture de la description suivante d'un mode de réalisation particulier de celle-ci, en liaison avec les dessins annexés sur lesquels :
- la figure 1 représente un circuit hydraulique de commande conforme à l'art antérieur,
- la figure 2 représente un circuit hydraulique de commande conforme à l'invention.

Comme indiqué plus haut, l'invention s'applique à une transmission automatique. Le train épicycloïdal de la transmission concernée n'a pas été représenté. La logique séquentielle de son circuit hydraulique de commande est telle qu'il existe au moins une vanne - ou distributeur - hydraulique à deux positions (0) et (1). L'état de cette vanne sera avantageusement à (0) sur le premier rapport de marche avant et à (1) sur l'ensemble des autres rapports, y compris le rapport de marche arrière. Conformément à la logique séquentielle appliquée sur la plupart des transmissions automatiques développées actuellement, la commande de l'embrayage de pontage du convertisseur de couple est rendue inopérante par la commande hydraulique sur le premier rapport de marche avant. La mise en oeuvre de l'invention suppose par ailleurs que la commande de débrayage à l'arrêt intervienne sur un récepteur hydraulique affecté au premier rapport de marche avant de façon à desserrer automatiquement et de manière contrôlée ce dernier, pour interrompre la transmission du couple moteur aux roues, lorsque le véhicule est à l'arrêt, moteur tournant, sur le premier rapport de marche avant. Enfin, il faut noter qu'il est indifférent à la mise en oeuvre de l'invention que l'embrayage de pontage ait un fonctionnement du type tout ou rien ou du type piloté de façon à autoriser un glissement entre l'entrée et la sortie de l'embrayage, pour permettre à ce dernier d'agir en amortisseur des oscillations de couple du moteur thermique.

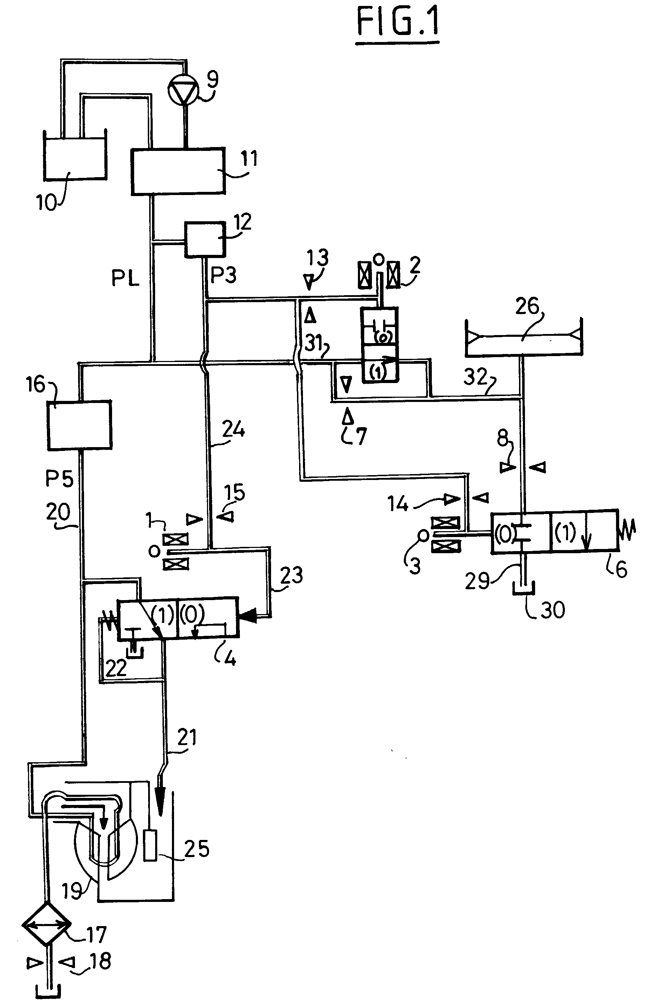

Sur la figure 1 on a fait apparaître une pompe 9 qui aspire l'huile dans un bac 10 et débite celle-ci sur une vanne de régulation de pression de ligne 11 générant une pression de ligne variable PL dirigée vers le récepteur d'entrée 26 de la transmission et vers une première vanne de régulation 16. Une seconde vanne de régulation 12 génère une pression d'alimentation P3 des électrovannes de commandes 1, 2 ou 3 au travers d'ajutages 13, 14, 15. La première vanne de régulation 16 génère une pression P5 alimentant le convertisseur de couple 19, un circuit de refroidissement 17 et un circuit de graissage 18.

Le pontage et le dépontage du convertisseur de couple 19 est contrôlé par une première vanne de distribution 4. La première vanne ou "tiroir" de distribution 4 régule une pression de commande 21 de l'embrayage de pontage 25 à partir de la pression P5, au travers d'une mise à zéro 22. Le pilotage de la première vanne de distribution 4 est assuré par une pression transmise par le canal 23 et générée à partir de la pression de pilotage P3, par l'intermédiaire d'une première électrovanne 1 et de l'ajutage 15 placé en amont de celle-ci, sur sa canalisation d'alimentation 24. Lorsque la première électrovanne 1 est fermée, la pression de son canal de sortie 23 est maximale, le premier tiroir de distribution 4 est en position (0), et le canal 21 est alimenté par la pression P5, du canal 20. L'embrayage de pontage 25 est alors serré. Si l'électrovanne 1 est une électrovanne proportionnelle, une pression de consigne dans le canal de sortie 23 délivrée par celle-ci génère une pression de commande de l'embrayage de pontage 25 comprise entre 0 et P5. L'adaptation de P5 au couple d'entrée du convertisseur de couple 19 permettra d'obtenir un glissement contrôlé de l'embrayage de pontage 25.

Sur cette même figure 1, il apparaît également que le récepteur d'entrée 26 de la transmission est alimenté par l'intermédiaire d'un second distributeur hydraulique 5 piloté par la seconde électrovanne 2 associée à l'ajutage 13, placé en amont de celle-ci. Lorsque le second distributeur 5 est en position (1), il autorise l'alimentation du récepteur 26 par le canal principal 31 et par le canal secondaire 32 au travers de l'ajutage 7 de celui-ci. En position (0), le second distributeur 5 autorise l'alimentation du récepteur 26, uniquement au travers de l'ajutage 7 du canal secondaire 32. Lorsque la fonction de débrayage à l'arrêt est inopérante, la vanne 6 de vidange du troisième récepteur 6 ou distributeur-hydraulique 6 est maintenue en position fermée (0) sur l'ordre de la troisième électrovanne 3 -ou électrovanne de sortie 3- du récepteur 26. Pour obtenir le débrayage à l'arrêt, le second distributeur 5 passera en position (0) et le troisième distributeur 6 en position (1). Le récepteur d'entrée 26 est alors alimenté par une pression de consigne PC qui est une fraction de la pression de ligne PL. Cette pression de consigne PC est obtenue grâce à la présence du premier et du second gicleur 7, 8 disposés en cascade sur le canal secondaire 32 et le canal de vidange 29, communiquant avec la bâche 30. Ainsi, en faisant varier la pression de ligne PL, la pression de consigne PC peut être modulée de façon à ce que la capacité en couple du récepteur d'entrée 26 ne soit plus suffisante pour transmettre le couple d'entrée aux roues.

Le circuit qui est représenté sur la figure 1 comporte donc obligatoirement au moins deux électrovannes distinctes 1 et 3 pilotant respectivement le premier tiroir de distribution 4 qui régule la pression de commande de l'embrayage de pontage 25 du convertisseur 19, et le troisième tiroir de distribution 6 qui commande la mise à la bâche du récepteur d'entrée 26.

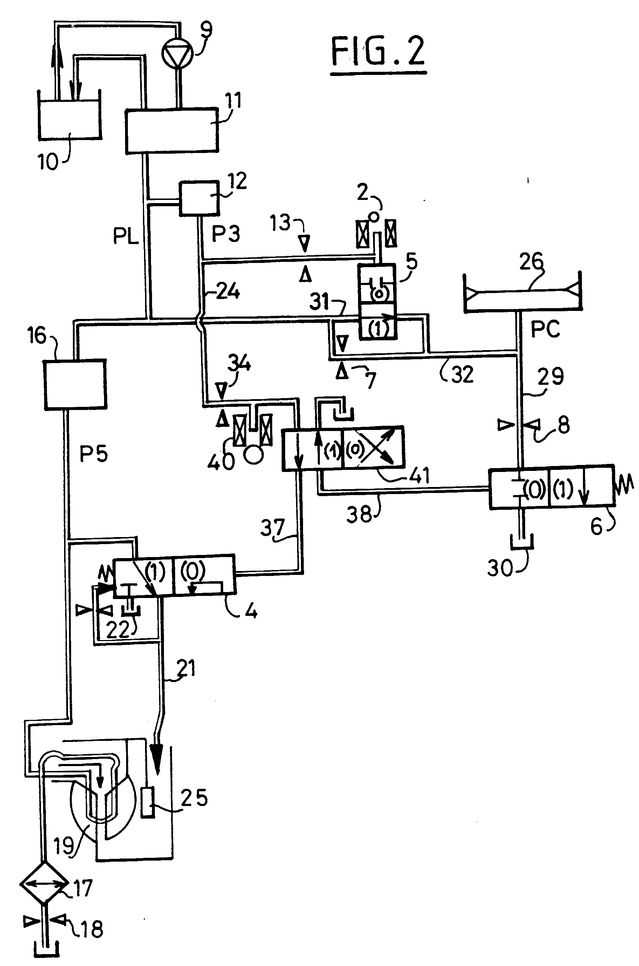

Sur la figure 2 relative au procédé et au dispositif de commande de l'invention, on retrouve la pompe 9 aspirant l'huile dans le bac 10 et débitant celle-ci sur une première vanne de régulation 11 générant une pression de ligne variable PL. La partie du circuit relative au pontage du convertisseur de couple 19 est identique à celle de la figure 1, notamment en ce qui concerne les fonctions du premier tiroir 4 vis à vis de l'embrayage de pontage 25. En revanche le contrôle des trois tiroirs de distribution 4, 5 et 6 est différent. En effet, conformément à l'invention, la pression de pilotage P3 du canal 24, issue de la première vanne de régulation 12 transite, après avoir rencontré un ajutage d'admission 34, par un tiroir de distribution principal dont l'état est à zéro sur le premier rapport de marche avant, et à un sur tous les autres rapports, y compris le rapport de marche arrière.

Par l'intermédiaire de l'électrovanne centrale 40, le tiroir de distribution principal 41 peut occuper une première position ou position (0), dans laquelle la pression d'alimentation P3 est dirigée par la première conduite 38 de sortie sur le troisième tiroir de distribution 6, de façon à placer ce dernier en position (1), autorisant le débrayage à l'arrêt. Le tiroir de distribution principal 41 peut également occuper une seconde position ou position (1), dans laquelle la pression de pilotage est envoyée par la seconde conduite de sortie 37 en direction du premier distributeur 4 régulant la pression d'alimentation de l'embrayage de pontage de convertisseur 25. Par ailleurs, dans chacune des deux positions du tiroir de distribution principal 41, les circuits d'alimentation respectifs de l'embrayage de pontage du convertisseur 25 et du récepteur d'entrée 26, ont un fonctionnement correspondant à celui du circuit de la figure 1 illustrant l'art antérieur.

Comme on l'aura compris, sur le premier rapport de marche avant, le tiroir principal 41 est en position (0), et ce dernier impose au premier tiroir 4 sa position (0), interdisant le pontage du convertisseur et placant le troisième tiroir de distribution 6 en position (1). Le second tiroir 5 ayant par ailleurs été placé en position (0) par la seconde électrovanne de commande 2, le débrayage à l'arrêt est autorisé. En revanche, sur les autres rapports, le tiroir principal 41 étant dans sa position (1), ce dernier autorise le pontage du convertisseur 19. Dans cette seconde situation, le troisième tiroir de distribution 6 est placé en position (0) et le second tiroir 5 en position (1) si bien que la fonction de débrayage à l'arrêt est inopérante.

En conclusion, l'invention permet de simplifier considérablement le circuit hydraulique de la transmission automatique. Elle assure notamment la suppression d'une électrovanne de pilotage puisque la même électrovanne ou électrovanne centrale 40 permet le contrôle des fonctions de pontage du convertisseur et de débrayage à l'arrêt de la transmission.

## Revendications

1. Procédé de commande de la pression d'alimentation d'un récepteur hydraulique d'entrée (26), et d'un embrayage de pontage (25) du convertisseur de couple (19) d'une transmission automatique à rapports étagés comportant un train épicycloïdal qui reçoit le couple sur au moins un rapport de marche avant par l'intermédiaire dudit convertisseur (19), et un circuit hydraulique de commande muni d'un distributeur hydraulique principal (41) basculant entre une première position ou position (0) dans laquelle une pression d'alimentation P3 est orientée de façon à interdire le pontage du convertisseur (19) en autorisant le débrayage à l'arrêt de la transmission, et une seconde position, ou position (1) dans laquelle la même pression d'alimentation P3 est orientée de façon à autoriser le pontage du convertisseur (19), tandis que la fonction de débrayage à l'arrêt est inopérante, caractérisé en ce que le distributeur principal (41) est placé sous le contrôle d'une électrovanne centrale de façon à occuper sa première position ou position (0) sur le premier rapport de marche avant, et sa seconde position ou position (1) sur les autres rapports, y compris le rapport de marche arrière.

2. Dispositif de commande de la pression d'alimentation d'un récepteur hydraulique d'entrée (26) et d'un embrayage de pontage (25) du convertisseur de couple (19) d'une transmission automatique à rapports étagés, comportant une pompe hydraulique (9) délivrant par l'intermédiaire d'un régulateur de pression principal (11) une pression de ligne (PL) dirigée en direction d'une vanne de régulation de pression (16) du convertisseur de couple (19), en direction d'un récepteur hydraulique (26) responsable de l'interruption de la transmission du couple aux roues lorsque les conditions de débrayage à l'arrêt sont satisfaites, et en direction d'un distributeur hydraulique principal (41) qui reçoit une pression d'alimentation P3 régulée à partir de la pression de ligne (PL) par une seconde vanne de régulation (12), et oriente ladite pression d'alimentation P3 de façon à interdire le pontage du convertisseur (19) en autorisant le débrayage à l'arrêt, ou inversement, caractérisé en ce que le distributeur principal (41) occupe une première position ou position (0) sur le premier rapport de marche avant et une seconde position ou position (1) sur les autres rapports, y compris le rapport de marche arrière.

3. Dispositif de commande selon la revendication 2, caractérisé en ce que le distributeur principal (41) distribue en position (0) la pression d'alimentation P3 en direction d'un troisième tiroir de distribution (6) autorisant alors la vidange du récepteur (26) lorsque les conditions de débrayage à l'arrêt sont satisfaites, tandis qu'en position (1), il distribue la pression d'alimentation P3 en direction d'un premier tiroir de distribution (4) régulant la pression de commande de l'embrayage (25) de pontage du convertisseur (19).

4. Dispositif de commande selon les revendications 2 ou 3, caractérisé en ce que la pression P5 dirigée vers le convertisseur (19) est régulée à partir de la pression de ligne PL par une première vanne de régulation (16) et orientée partiellement vers le premier tiroir de distribution (4) régulant la pression de commande de l'embrayage de pontage, lui-même sollicité par la pression d'alimentation P3 lorsque le distributeur hydraulique principal (41) est en position (1) de façon à déclencher le pontage du convertisseur (19) dans cette situation.

5. Dispositif de commande selon l'une quelconque des revendications 2, 3 ou 4, caractérisé en ce que la pression de ligne PL dirigée vers le récepteur hydraulique (26) parvient à celui-ci partiellement, après division par un gicleur (7) ou en totalité par l'intermédiaire d'un second tiroir de distribution (5) ce dernier étant sollicité par la pression d'alimentation P3 à partir d'une seconde électrovanne (2) de commande.

## Claims

1. Method for controlling the supply pressure of an initial hydraulic receiver (26) and a bridging clutch (25) for a torque converter (19) of an automatic transmission with stepped ratios comprising a planetary transmission which receives the torque on at least one forward ratio by means of said converter (19), and a hydraulic control circuit equipped with a main hydraulic distributer (41) switching between a first position or position (0) in which the supply pressure P3 is oriented so as to prevent bridging of the converter (19) while permitting declutching at stopping of the transmission, and a second position or position (1) in which the same supply pressure P3 is oriented so as to allow bridging of the converter (19), whereas the declutching at stopping function is inoperative, characterised in that the main distributer (41) is placed under the control of a central solenoid valve so as to occupy its first position or position (0) on the first forward ratio and its second position or position (1) on the other ratios, including the reverse ratio.

2. Device for controlling the supply pressure of an initial hydraulic receiver (26) and a bridging clutch for a torque converter (19) of an automatic transmission with stepped ratios, comprising a hydraulic pump (9) delivering a line pressure (PL) by means of a main pressure regulator (11), directed towards a pressure regulating valve (16) for the torque converter (19), towards a hydraulic receiver (26) responsible for the interruption of the torque transmission to the wheels when the conditions for declutching at stopping are met, and towards a main hydraulic distributer (41) which receives a supply pressure P3 regulated by the line pressure (PL) by a second regulating valve (12), and orients said supply pressure P3 such as to prevent bridging of the converter (19) while allowing declutching at stopping, or vice-versa, characterised in that the main distributer (41) occupies a first position or position (0) on the first forward ratio, and a second ratio or position (1) on the other ratios, including the reverse ratio.

3. Control device according to claim 2, characterised in that the main distributer (41) distributes, in position (0) the supply pressure P3 in the direction of a third distribution slide valve (6) allowing the emptying of the receiver (26) when the conditions for declutching at stopping are satisfied, whereas in position (1) it distributes the supply pressure P3 in the direction of a first distribution slide valve (4) regulating the control pressure for the bridging clutch (25) of the converter (19).

4. Control device according to claims 2 or 3, characterised in that the pressure P5 directed towards the converter (19) is regulated by the line pressure PL by a first regulating valve (16) and oriented partially towards the first distribution slide valve (4) regulating the control pressure for the bridging clutch, which is itself acted upon by the supply pressure P3 when the main hydraulic distributer (41) is in position (1) so as to release the bridging of the converter (19) in this situation.

5. Control device according to any one of claims 2, 3 or 4, characterised in that the line pressure PL directed towards the hydraulic receiver (26) reaches it partially after division by a nozzle (7) or entirely by means of a second distribution slide valve (5), the latter being acted upon by the supply pressure P3 from a second solenoid control valve (2).

## Patentansprüche

1. Verfahren zur Steuerung des Versorgungsdrucks eines hydraulischen Eingangsaufnehmers (26) und einer Überbrückungskupplung (25) eines Drehmomentwandlers (19) eines automatischen Getriebes mit abgestuften Gängen, das ein Planetengetriebe aufweist, dem das Drehmoment in mindestens einem Vorwärtsgang mittels des Wandlers (19) zugeführt wird, sowie einen hydraulischen Steuerkreis aufweist, der mit einem hydraulischen Hauptverteiler (41) versehen ist, der zwischen einer ersten oder Stellung (0), in der ein Versorgungsdruck P3 derart wirkt, daß er die Überbrückung des Wandlers (19) verhindert, indem das Auskuppeln bei Stillstand des Getriebes erfolgt, und einer zweiten Stellung oder Stellung (1), in der der gleiche Versorgungsdruck P3 derart wirkt, daß die Überbrückung des Wandlers (19) erfolgt, während die Auskuppelfunktion bei Stillstand unwirksam ist, umschaltbar ist, **dadurch gekennzeichnet,** daß der Hauptverteiler (41) von einem zentralen Elektroventil derart gesteuert wird, daß er seine erste Stellung oder Stellung (0) im ersten Vorwärtsgang einnimmt und seine zweite Stellung oder Stellung (1) in den anderen Gängen, einschließlich des Rückwärtsganges, einnimmt.

2. Vorrichtung zur Steuerung des Versorgungsdrucks eines hydraulischen Eingangsaufnehmers (26) und einer Überbrückungskupplung (25) des Drehmomentwandlers (19) eines automatischen Getriebes mit abgestuften Gängen, mit einer hydraulischen Pumpe 9, die mittels eines hydraulischen Druckreglers (11) einen Leitungsdruck PL in Richtung eines Druckregelventils (16) des Drehmomentwandlers (19) liefert, in Richtung eines hydraulischen Aufnehmers (26), der für die Unterbrechung der Überbrückuung des Drehmomentes zu den Rädern sorgt, wenn die Bedingungen zum Auskuppeln bei Stillstand erfüllt sind und in Richtung eines hydraulischen Hauptverteilers (41), dem ein Versorgungsdruck P3 zugeführt wird, der vom Leitungsdruck PL über ein zweites Steuerventil (12) gesteuert wird, und wobei der Versorgungsdruck P3 dergestalt ausgerichtet wird, daß die Überbrückung des Wandlers (19) verhindert und das Auskuppeln bei Stillstand ermöglicht wird oder umgekehrt, **dadurch gekennzeichnet,** daß der Hauptverteiler (41) eine erste Stellung oder Stellung (0) im ersten Vorwärtsgang einnimmt und eine zweite Stellung oder Stellung (1) in den anderen Gängen, einschließlich des Rückwärtsganges, einnimmt.

3. Vorrichtung zur Steuerung nach Anspruch 2, **dadurch gekenzeichnet,** daß der Hauptverteiler (41) in der Stellung (0) den Versorgungsdruck P3 in Richtung eines dritten Verteilschiebers (6) leitet zur Entleerung des Aufnehmers (26), wenn die Bedingungen für das Auskuppeln bei Stillstand erfüllt sind, während in der Position (1) er den Versorgungsdruck P3 in Richtung eines ersten Verteilschiebers (4) leitet, der den Steuerdruck für die Überbrückungskupplung (25) des Wandlers (19) steuert.

4. Vorrichtung zur Steuerung nach Ansprüchen 2 oder 3, **dadurch gekennzeichnet,** daß der dem Wandler (19) zugeführte Druck P5 gesteuert wird ausgehend vom, Leitungsdruck PL durch ein erstes Steuerventil (16) und teilweise in Richtung des ersten Verteilschiebers (4) geleitet wird, der den Steuerdruck für die Überbrückungskupplung steuert und vom Leitungsdruck P3 beaufschlagt wird, wenn sich der hydraulische Hauptverteiler (41) in der Stellung (1) befindet, dergestalt, daß die Überbrückung des Wandlers (19) in dieser Stellung ausgelöst wird.

5. Vorrichtung zur Steuerung nach einem der Ansprüche 2,3 oder 4, **dadurch gekennzeichnet,** daß der dem hydraulischen Aufnehmer (26) zugeführte Leitungsdruck PL dort teilweise eintrifft nach Verringerung durch eine Engstelle (7) oder vollständig eintrifft mittels eines zweiten Verteilschiebers (5), welcher vom Versorgungsdruck P3 beaufschlagt wird, ausgehend von einem zweiten Steuer-Elektroventil 2.
